# EUROPEAN PATENT APPLICATION

(11) **EP 1 672 568 A1**
(43) Date of publication of application: **21.06.2006**
(21) Application number: 04257920.1
(22) Date of filing: 17.12.2004
(51) Int. Cl.: G06K 19/14, G07D 7/12

(54) **Security labels which are difficult to counterfeit**

(71) Applicant: NCR INTERNATIONAL INC., Dayton, Ohio 45479 (US)
(72) Inventor: Ross, Gary A., Colinsburgh Fife (GB); Clark, Barrie, Liff Village Dundee DD2 5PJ (GB); Johnson, Graham I., Tayport Fife DD6 9AA (GB); Forrest, Simson J., Dundee DD3 6BW (GB)
(74) Representative: Williamson, Brian

(57) **Abstract**

A system for tagging articles. A glass is fabricated from (1) a combination of oxides and (2) one or more rare earth elements. The glass is divided into particles or fragments, which are attached to the article. When the particles are excited by specific radiation, they emit a characteristic signature, in terms of a collection of frequencies, each frequency having a characteristic amplitude and decay time. However, the particles cannot be counterfeited, or reverse-engineered, because, at present, no systematic data is available which correlates a particle's characteristic signature with the composition and processing of the particle itself. Thus, at best, a trial-and-error approach must be taken in attempts at counterfeiting, which is considered impossible.

## Description

The present invention relates to security markers, which are generally attached to, or embedded in, objects. The security marker contains indicia which can identify its origin and thus the origin of the object. The security marker is difficult to counterfeit under today's technology.

### Background of the Invention

Security markers are used to authenticate items. For example, bank notes typically include security markers such as watermarks, fluorescent inks, security threads, holograms, kinegrams, and such like. However, with advances in copying technology, it is becoming more difficult to provide security markers, which are not only difficult to counterfeit, but also easy to detect, quick to detect in situ, and inexpensive.

Chemical and biochemical taggants are also used as security markers. However, in many cases such taggants must be removed from the item prior to being analyzed. This is both time-consuming and expensive.

Optically based approaches, such as fluorescent labels, have also been used. Fluorescent materials emit light when excited by radiation of a particular wavelength. Information can be encoded in fluorescent inks, and can only be retrieved when the mark is illuminated with radiation of the appropriate wavelength.

An example of a particular type of fluorescent ink is described in US patent 5,256,193, which is hereby incorporated by reference. The following patents describe various security labeling and printing applications, and are hereby incorporated by reference: JP 8208976; US 4,736,425; US 5,837,042; US 3,473,027; US 5,599,578; GB 2,258,659; US 6,344,261; and US 4,047,033.

However, known inks and dyes have the disadvantage that they have very broad spectra, which limits the number of inks and dyes that can be used in a particular item. An example will illustrate this limitation.

Consider the visible spectrum, which ranges from red, through orange, yellow, green, blue, indigo, and violet. One ink may produce a color which spans from red through green. Another may produce a color which spans from green through violet. Thus, if these two inks are used, it is difficult to use a third ink with them, because the first two inks cover the entire visible spectrum.

For many purposes, it is desirable to use inks having a narrower spectrum, such as an ink which occupies only the red part of the spectrum, or less. In general, fluorescent inks do not offer this property.

### Objects of the Invention

An object of the invention is to provide an improved tag.

A further object of the invention is to provide a tag which radiates light in response to optical excitation, which radiated light has a narrow spectral width.

### Summary of the Invention

In one form of the invention, a glass composition is fabricated, which produces a unique optical signature in response to exciting radiation, and the glass composition is difficult to copy to form a second composition which produces the same unique optical signature.

According to a first aspect of the present invention there is provided an optically detectable security marker for emitting light at a pre-selected wavelength, the marker comprising: a rare earth dopant and a carrier incorporating the rare earth dopant, the interaction of the carrier and the dopant being such as to provide a fluorescent fingerprint or response that is different from that of the rare earth dopant.

The rare earth element which is used as the dopant has an intrinsic set of electronic energy levels. The interaction between the carrier and the dopant is such that these intrinsic energy levels change when the dopant is incorporated into the carrier. For example, when the dopant is incorporated into a glass, new energy levels (from the glass) are made available for transitions, thus altering the electron arrangement and hence the energy levels of absorption and fluorescent emission. These transitions can assist recombinations that were previously prohibited. Altering the rare earth dopant and/or dopant chelate and/or the composition of the carrier changes these energy levels and hence the observed fluorescent fingerprint.

By virtue of this aspect of the invention an optically detectable security marker is provided that can be tailored to have strong fluorescent light emission at a pre-selected wavelength when illuminated with a particular wavelength of light. This enables a validator to validate the security marker by detecting emission at the pre-selected wavelength in response to radiation at a particular wavelength. Such a security marker is very difficult to replicate by a counterfeiter.

Preferably, the rare earth dopant is a lanthanide.

Preferably, the carrier comprises a glass or a plastic. The carrier in which the rare earth dopant is embedded can readily be produced in a variety of formats, e.g. microbeads or fibers suitable for inclusion in products (such as those made from plastic or paper). Alternatively the rare earth dopant may be an integral part of the polymer matrix forming a product.

Due to the discrete fluorescence wavelength of a carrier doped with a rare earth element, multiple carriers can be used (or a single carrier doped with multiple rare earth elements), each prepared to have a different pre-selected emission wavelength, so that a security profile comprising multiple wavelengths can be provided in a single item without the different wavelengths overlapping each other. This enables a security marker to be provided that has a security profile selected from a large number of permutations, thereby greatly increasing the difficulty in counterfeiting such a security marker.

The carrier doped with the rare earth ion has a new energy level profile that allows transitions different to those allowed by either the rare earth element or the undoped carrier.

The new energy profile is particularly advantageous for security purposes because it provides narrow emissions at wavelengths not naturally found in either the rare earth element or the undoped carrier. These narrow emissions can be used as part of a security marker.

Preferably a plurality of rare earth dopants is used. One or more of these different rare earth dopants may have intrinsic fluorescence emissions that are visible to the unaided human eye and one or more may have intrinsic fluorescence emissions that are invisible to the unaided human eye, for example infra-red or ultra-violet fluorescence emissions.

Preferably, the combined effect of the carrier and the rare earth dopant is such as to cause the security marker to emit light that is visible by the unaided eye, for example in the range of 390-700nm.

Preferably, the security marker can be excited by highly selective, high intensity visible light and the resultant emission can be detected in the visible region.

It may be desirable to add secondary dopants (such as other rare earth elements) to a carrier including primary dopants (i.e., those dopants that have already been introduced into the carrier to produce fluorescence at the pre-selected wavelength) even though the emissions from these secondary dopants are not conducive to the desired transitions (i.e., the fluorescence at a pre-selected wavelength). This is because the energy levels of these secondary dopants can contribute to otherwise prohibited transitions. Thus, the secondary dopants do not fluoresce at the pre-selected wavelength, but rather they contribute indirectly by strengthening the fluorescence from primary dopants at the pre-selected wavelength.

Various ratios and concentrations of dopants have been tested. In one example, the doping used was about 3 mol %, based upon the total number of moles of oxides and dopants in the composition. About 1 to 3 mol % is used for single and multi doped beads of glass (i.e., 1 mol % Eu, 1 of Tb 1 of Dy for 1 bead in steps (of each) of 0.5 mol % up to 2 mol % Eu, 3 mol % Tb and 3 mol % Dy). Bead size was about 50 micron (for screen printing). One type of glass used in this example has a soft point of about 740 degrees C, although the exact melting point depends on the specific glass used, and may vary from 700 degrees C to 1500 degrees C. For some embodiments, efficiency may level off for doping above 3 mol %.

Different methods of doping glass with rare earth elements are known. The following patents or published applications describe various doping methods, and are hereby incorporated by reference: US 6,153,339; US 5,262,365; and US Published Application 2004/0212302.

Glass beads have been fabricated and tested (fluorescent spectra has been measured) for beads varying from 5µm in diameter (which is a suitable size for incorporating in inkjet fluid) to 100µm in diameter (which is a suitable size for screen printing applications). To obtain beads having a size of approximately 5µm, the beads can be passed through a micro sieve having 6µm apertures/reticulations.

According to a second aspect of the present invention there is provided an item having an optically detectable security feature for emitting light at a pre-selected wavelength, the item comprising: a rare earth dopant and a carrier incorporating the rare earth dopant, the interaction of the carrier and the dopant being such as to provide a fluorescent fingerprint or response that is different from that of the rare earth dopant.

The item may be validated by irradiating the item and detecting emissions at the pre-selected wavelength.

The item may be a fluid. Examples of fluids particularly suitable for use with the invention include fuel, paint, ink and such like.

Preferably, the item is a laminar media item. The laminar media item may be in the form of a web, or in sheet form. Examples of sheet form laminar media items include banknotes and financial instruments such as checks.

Preferably, the item includes a plurality of security markers, each marker emitting at a different pre-selected wavelength. Alternatively, a marker may includes a plurality of rare earth dopants.

In a preferred embodiment, the markers have different concentrations of dopant, so that the intensities of the pre-selected wavelength emissions are different.

By virtue of this feature, the relative emission intensity of different pre-selected wavelengths can be used as a security feature. For example, one pre-selected wavelength intensity may be 100%, another pre-selected wavelength intensity 50%, a third pre-selected intensity 25%, and a fourth pre-selected intensity 50%. More or less than four wavelengths can be used. This provides a large variety of security profiles, where each profile comprises a ratio of intensities of a plurality of wavelengths. This also makes counterfeiting even more difficult, as the quantities of each dopant must be accurately replicated, in addition to the carrier energy difference.

In one embodiment, the emission from each marker decays over a different time period. By virtue of this feature, the time over which an emission occurs for a particular wavelength can be used as part of a security profile.

According to a third aspect of the invention there is provided a system for validating an item having an optically detectable security feature emitting light at one of a plurality of pre-selected wavelengths, where the security feature has a carrier incorporating a rare earth dopant, the system comprising: means for illuminating the security feature with one or more wavelengths for producing emissions from the rare earth dopant; means for detecting emission from the security feature at a pre-selected wavelength; means for filtering and comparing the detected emission with a security profile for the item; and means for indicating a successful validation in the event of the emission matching the security profile.

Preferably, the means for illuminating the item may comprise a pulsed light emitting diode, a laser diode, or a filtered broadband light source, and an illumination filter for ensuring that only a narrow band of wavelengths illuminate the item.

Preferably, the means for detecting emission comprise a detection filter to filter out all wavelengths except the pre-selected wavelength, and a photodiode to detect the intensity of light passing through the detection filter.

In a preferred embodiment, the illumination means comprises an array of LEDs, each LED having a different illumination filter, so that the item to be validated is illuminated with multiple wavelengths. In such an embodiment, the detection means comprises an array of photodiodes, each photodiode having a different detection filter, so that the emission at each pre-selected wavelength can be determined.

According to a fourth aspect of the invention there is provided a method of validating an item having an optically detectable security feature emitting light at one of a plurality of pre-selected wavelengths, the method comprising the steps of: illuminating the security feature with light at one or more wavelengths for producing emissions from the rare earth dopant; detecting emission from the security feature at a pre-selected wavelength; filtering and comparing the detected emission with a security profile for the item; and indicating a successful validation in the event of the emission matching the security profile.

According to a fifth aspect of the invention, there is provided an optically detectable security marker for emitting light at a pre-selected wavelength, the marker comprising: a rare earth dopant incorporated within a carrier material, the dopant and the carrier material being such as to cause emission of visible light in response to optical stimulation by visible light of a pre-determined wavelength.

Preferably, the interaction of the carrier and the dopant is such as to provide a fluorescent fingerprint or response that is different from that of the rare earth dopant.

According to a sixth aspect of the invention, there is provided a security item that includes an optically detectable security marker for emitting light at a pre-selected wavelength, the marker comprising: a rare earth dopant incorporated within a carrier material, the dopant and the carrier material being such as to cause emission of visible light in response to optical excitation by visible light.

Preferably, the security item is a fluid, for example fuel, paint, ink and such like. Alternatively the security item may be a laminar media item, for example banknotes and financial instruments such as checks.

Preferably, the item includes a plurality of security markers, each marker emitting at a different pre-selected wavelength.

Preferably, the interaction of the carrier and the dopant is such as to provide a fluorescent fingerprint that is different from that of the rare earth dopant.

According to a seventh aspect of the invention, there is provided a security marker comprising a borosilicate based glass, preferably including SiO₂; NaO; CaO; MgO; Al₂O₃ 0.29; FeO and/or Fe₂O₃; K₂O, and B₂O₃, and a rare earth dopant, preferably a lanthanide. Preferably the glass has a composition of: SiO₂ 51.79 wt%; NaO 9.79 wt%; CaO 7.00 wt%; MgO 2.36 wt%; Al₂O₃ 0.29 wt%; FeO, Fe₂O₃ 0.14V wt%; K₂O 0.07 wt%, and B₂O₃ 28.56 wt%, not precluding the use of other glass mixes. The glass and the rare earth ion may be formed into a micro-bead.

The marker comprises a carrier, such as glass or plastic including one or more types of rare earth ion. The interaction of the glass or plastic and the dopant is such that the spectral response of the marker is different from that of the rare earth dopant or the carrier per se. In particular, the interaction between the carrier and the dopant is such that the intrinsic energy levels of the dopant change when it is incorporated into the carrier. For example, when the dopant is incorporated into a glass, new bonds are formed in the doped glass, thus altering the electron arrangement and hence the energy levels of absorption and fluorescent emission. Altering the rare earth dopant and/or dopant chelate and /or the composition of the carrier changes these energy levels and hence the observed fluorescent fingerprint. The preferred dopant is any of the lanthanides except Lanthanum.

Preferably the rare earth doped glass is formed into micro-beads that can be included in, for example, a fluid such as ink.

According to an eighth aspect of the invention, there is provided a kit comprising a) a collection of samples derived from a single batch of material, all samples producing a common response signature when illuminated by a set of excitation frequencies, and b) a scanner for illuminating a test sample with the set of excitation frequencies and ascertaining whether the test sample produces the response signature.

Preferably, the scanner includes data indicating the response signature, and compares a signature obtained from the test sample with the data.

Preferably, the scanner i) includes one of the samples as a reference, ii) obtains a signature from the reference, iii) obtains a signature from the test sample, and iv) compares the two signatures.

According to a ninth aspect of the invention, there is provided a method, comprising:
a) maintaining a database containing
   i) a collection of signatures, each produced by a different glass when irradiated; and
   ii) information associated with each signature;
b) receiving a query-signature from a user;
c) retrieving from the database information associated with the query-signature; and
d) delivering the information to the user.
The query-signature may be obtained from glass embedded in, or removed from, human tissue. The query-signature may be obtained from glass attached to a document. The signatures may comprise two optical frequencies. The signatures may further comprise an intensity for each frequency. The signatures may further comprise a time period for each frequency.

According to a tenth aspect of the invention, there is provided an apparatus, comprising:
a) a database containing
   i) a collection of signatures, each produced by a different glass when irradiated;
   ii) information associated with each signature; and
b) means for
   i) receiving a query-signature from a user;
   ii) retrieving from the database information associated with the query-signature; and
   iii) delivering the information to the user.
   The signatures may comprise two optical frequencies. The signatures may further comprise an intensity for each frequency. The signatures may further comprise a time period for each frequency. The information may identify a person, place, or composition of matter. The information may identify a person, place, or composition of matter.

According to an eleventh aspect of the invention, there is provided a system, comprising:
a) a database containing
   i) a collection of vectors, each vector
      A) corresponding to a type of glass, and
      B) describing an output signature producible by the type of glass;
   ii) characterizing data associated with each vector which indicates one, or more, of the following:
      A) composition of the corresponding type of glass;
      B) processing undergone by the corresponding type of glass;
      C) identity of a foundry which manufactured the corresponding type of glass; and
      D) identity of an entity which owned the corresponding type of glass; and
b) means for
   i) receiving a query-vector from a user;
   ii) obtaining from the database characterizing data corresponding to the query-vector, and
   iii) delivering the characterizing data to a user.

According to a twelfth aspect of the invention, there is provided an apparatus, comprising:
a) a visual image carried on a substrate; and
b) a glass sample, connected to the substrate, which contains a rare earth element, and produces an optical signature when excited by predetermined frequencies.

According to a thirteenth aspect of the invention, there is provided a method, comprising:
a) receiving a document with a request for copying;
b) illuminating the document with at least two radiation frequencies F1 and F2, and testing for re-radiation at least two other frequencies F3 and F4;
c) if frequencies F3 and F4 are detected, blocking copying of the document.

According to a fourteenth aspect of the invention, there is provided apparatus for prevention of copying of copy-protected works, comprising:
a) a photocopier which includes a copy station where documents to be copied are positioned;
b) illumination means for projecting one or more discrete frequencies to the copy station;
c) detector means for detecting whether one or more discrete frequencies emanating from the copy station, and, if so, blocking the photocopier from copying.

According to a fifteenth aspect of the invention, there is provided a method, comprising:
a) selecting an article;
b) attaching to the article a collection of particles which
   i) are invisible to the unaided eye in ordinary daylight;
   ii) remain undamaged by temperatures up to 400 F; and
   iii) all emit an identical optical signature in response to predetermined excitation frequencies.
      The optical signature may include at least two different frequencies, an intensity for each frequency, and a time interval for each frequency. The method may further comprise:
   c) attaching to the article a second collection of particles which
      i) are invisible to the unaided eye in ordinary daylight;
      ii) remain undamaged by temperatures up to 400 F; and
      iii) all emit an identical second optical signature in response to predetermined excitation frequencies.

According to a sixteenth aspect of the invention, there is provided a method, comprising:
a) obtaining an article on which appear no light-emitting taggants;
b) illuminating the article with radiation of two, or more, discrete frequencies;
c) detecting a radiation signature, if any, emitted from the article; and
d) using the radiation signature to obtain information from a database.

According to a seventeenth aspect of the invention, there is provided an apparatus, comprising:
a) a carrier;
b) two or more radiation-responsive tags, supported by the carrier, each tag producing an optical signature in response to excitation; and
c) an index supported by the carrier, which enables a scanner to selectively locate and excite each tag.
   The optical signatures of all tags are different from each other.

According to a eighteenth aspect of the invention, there is provided an apparatus, comprising:
a) an article usable for a function;
b) a collection of particles which
   i) are attached to the article,
   ii) are of identical composition, and contain (A) a mixture of different oxides and (B) a rare earth element,
   iii) were subjected to identical processing during manufacture; and
   iv) have no dimension greater than 20 microns. The article can perform said function in the absence of said particles. The particles may produce frequencies F1 and F2 in response to illumination at a frequency F3. The particles may remain undamaged when subjected to temperatures exceeding 400 F.

According to a nineteenth aspect of the invention, there is provided a method of tagging an article, comprising:
a) receiving glass tags which
   i) contain (A) a mixture of oxides and (B) a rare earth element; and
   ii) produce an identical signature in response to predetermined excitation radiation;
b) determining the optical signature; and
c) attaching tags to an article.

According to a twentieth aspect of the invention, there is provided a composition of matter, comprising:
a) a liquid which forms a coating when applied to an article; and
b) a first collection of particles which
   i) are substantially identical in composition;
   ii) are carried by the liquid; and
   iii) emit an optical signature when excited by predetermined radiation.
   The predetermined radiation may comprise two discrete frequencies. The particles may be invisible to the unaided eye. The optical signature may comprise two discrete frequencies. The coating may be transparent.

According to a twenty-first aspect of the invention, there is provided a method, comprising;
a) maintaining an inventory of glass powders, all powders producing different optical signatures when irradiated;
b) adding a first combination of glass powders to a first liquid, to thereby cause the first powder-liquid mixture to produce a first optical signature when irradiated; and
c) adding a second combination of glass powders to a second liquid, to thereby cause the second powder-liquid mixture to produce a second optical signature when irradiated.
   The powder-liquid mixtures may form a solid coating when applied to an article. The method may further comprise:
d) creating a first indicia which describes the first optical signature. The method may further comprise:
e) associating the first indicia with the first powder-liquid mixture. The method may further comprise:
d) creating a second indicia which describes the second optical signature. The method may further comprise:
e) associating the second indicia with the second powder-liquid mixture.

According to a twenty-second aspect of the invention, there is provided a method, comprising:
a) fabricating a glass A which contains at least one rare earth element;
b) ascertaining a signature A produced by the glass A in response to excitation radiation; and
c) recording in a library
   i) the signature A and
   ii) characteristics of the excitation radiation. The method may further comprise:
d) fabricating a glass B which contains at least one rare earth element;
e) ascertaining a signature B produced by the glass B in response to excitation radiation; and
f) recording in the library
   i) the signature B and
   ii) characteristics of the excitation radiation. The method may further comprise:
d) delivering fragments of the glass A to users; and
e) making the library available to the users, but denying access to the library to others.
   The method may further comprise:
f) delivering fragments of the glasses A and B to users; and
g) making the library available to the users, but denying access to the library to others.

According to a twenty-third aspect of the invention, there is provided a method, comprising:
a) producing a batch of doped glass of a first composition and using first process parameters;
b) ascertaining a signature of the batch produced in response to predetermined excitation; and
c) storing the signature in association with data indicating
   i) the first composition,
   ii) the process parameters, and
   iii) the predetermined excitation.

According to a twenty-fourth aspect of the invention, there is provided a method, comprising:
a) through a process A, producing a glass A of initial composition A, which produces a signature A in response to exciting radiation; and
b) changing either process A or initial composition A, or both, and producing a glass B which produces a signature B, different from signature A, in response to the exciting radiation.

According to a twenty-fifth aspect of the invention, there is provided an apparatus, comprising:
a) a first collection of glass samples, all traceable to a first billet which billet
   i) comprises a first composition of oxides and a rare earth element, and
   ii) was subjected to a first type of processing; and
b) a second collection of glass samples, all traceable to a second billet which billet
   i) comprises the first composition of oxides and said rare earth element, and
   ii) was subjected to a second type of processing
wherein the samples in the first collection all produce a first optical signature in response to exciting radiation, and the samples in the second collection all produce a second optical signature, different from the first optical signature, in response to the exciting radiation.

According to a twenty-sixth aspect of the invention, there is provided a method, comprising:
a) generating a composition A comprising oxides and a rare earth element, and subjecting composition A to a heat treatment A, and an annealing process A, to produce a glass A;
b) exciting glass A with predetermined radiation, and measuring a signature A produced in response;
c) generating a composition B comprising oxides and a rare earth element, and subjecting composition A to a heat treatment B, and an annealing process B, to produce a glass B; and
d) exciting glass B with predetermined radiation, and measuring a signature B produced in response.

According to a twenty-seventh aspect of the invention, there is provided an apparatus, comprising:
a) a database which includes a plurality of material data sets, each associated with a signature data set,
   i) each material data set indicating
      A) contents of a respective material and B) process parameters used in manufacturing the material; and
   ii) each signature data set identifying
      A) a type of excitation and
      B) a signature produced by the respective material, when subjected to the excitation; and
b) means for retrieving a material data set which is associated with a given signature data set.
   Fewer than 25 percent of the material data sets may be available to the general public. The database may further comprise means for allowing a remote party to retrieve the material data set associated with the given signature set. Fewer than 25 percent of the material data sets may be available in printed publications as defined in 35 USC 102. The plurality of material data sets may describe two or more materials having (1) substantially identical compositions but (2) different process parameters. The two or more materials may produce different response signatures in response to a single excitation. The plurality of material data sets may describe two or more materials having (1) different compositions but (2) substantially identical process parameters. The two or more materials may produce different response signatures in response to a single excitation.

According to a twenty-eighth aspect of the invention, there is provided a method, comprising:
a) producing a first composition of matter (1) having known contents and (2) subjected to known process parameters during manufacture;
b) subjecting the composition to radiation and detecting a response signature;
c) dividing the first composition into first segments;
d) delivering the first segments together with data indicating the response signature to a user.
   The method may further comprise:
e) producing a second composition of matter (1) having known contents and (2) subjected to known process parameters during manufacture; and
f) subjecting the second composition to radiation and detecting a response signature;
g) dividing the second composition into second segments;
h) delivering the second segments together with data indicating the response signature to a user.
The first and second segments may contain no granules larger than table salt. The first and second segments may be all individually invisible to the unaided eye.

According to a twenty-ninth aspect of the invention, there is provided a method, comprising:
a) illuminating a sample of glass and obtaining a sample optical signature from the sample;
b) obtaining a reference optical signature;
c) comparing the sample and reference signatures and, if they match, issuing a signal.

According to a thirtieth aspect of the invention, there is provided an optical scanner, comprising:
a) means for illuminating a sample;
b) means for detecting radiation produced by the sample in response to the illumination; and
c) means for classifying the sample into one of a plurality of categories, based on the radiation.

According to a thirty-first aspect of the invention, there is provided an optical scanner, comprising:
a) a support for positioning a sample at an interrogation station;
b) a projector for projecting one or more frequencies of excitation radiation toward the interrogation station; and
c) a detector for detecting a sample signature produced by the sample in response to the excitation radiation.
   The scanner is such that
   i) the sample may be contained in a carrier,
   ii) the carrier may contain more than one sample, and
   iii) the support may comprise means to selectively position each sample at the interrogation station. The projector may project a single excitation frequency at any given time. The projector may project multiple frequencies in sequence over time. The interrogation station may be external to the scanner. The interrogation station may be internal to the scanner. The scanner may be portable, and may contain a trigger for actuating the projector. The scanner may further comprise:
d) means for storing a reference signature; and
e) means for comparing the reference signature with the sample signature and, if they match, issuing a signal.
   The scanner may further comprise:
d) a reference material accessible to the scanner, which produces a reference signature when excited by the projector.
   The scanner may further comprise:
e) means for comparing the reference signature with the sample signature, and, if they match, issuing a signal.

According to a thirty-second aspect of the invention, there is provided an optical scanner, comprising:
a) a support for positioning a sample at an interrogation station;
b) a reference material;
c) a system for
   i) exciting the sample and the reference material to produce outputs;
   ii) comparing the outputs; and
   iii) if the outputs match, producing a match signal.

According to a thirty-third aspect of the invention, there is provided an optical scanner, comprising:
a) a support for positioning a non-crystalline sample at an interrogation station;
b) a reference material;
c) a projector for projecting
   i) a set of frequencies of excitation radiation toward the interrogation station;
   ii) the set of frequencies of excitation radiation toward the reference material; and
d) a detector for detecting
   i) a sample signature produced by the sample in response to the set of frequencies; and
   ii) a reference signature produced by the reference material in response to the set of frequencies.

According to a thirty-fourth aspect of the invention, there is provided an optical scanner, comprising:
a) means for accepting a carrier which contains a plurality of different optically active samples;
b) means for receiving selection signals, and selectively positioning a subset of the samples, in sequence, at an interrogation station; and
c) means for inducing optical activity in samples in the subset.

According to a thirty-fifth aspect of the invention, there is provided an apparatus, comprising:
a) a body subject to abrasion which removes material from the body;
b) a first set of indicators, in a relatively shallow region of the body, which emit a first type of signal if
   i) excited and
   ii) exposed by abrasion; and
c) a second set of indicators, in a relatively deep region of the body, which emit a second type of signal if
   i) excited and
   ii) exposed by abrasion.
   The second type of signal may be emitted after some, or all, of the first set of indicators have been removed from the body by abrasion.

According to a thirty-sixth aspect of the invention, there is provided an apparatus, comprising:
a) a body having a surface at which abrasion removes material;
b) one or more indicators embedded within the body which
   i) respond to a predetermined type of incoming radiation by emitting a first radiation signature; and
   ii) do not emit a significant radiation signature until abrasion exposes them.
   The indicators may be located within a range of depths from the surface, and may further comprise:
c) one or more indicators embedded within the body at another range of depths from the surface, which
   i) respond to a predetermined type of incoming radiation by emitting a second radiation signature, different from the first; and
   ii) do not emit a significant radiation signature until abrasion exposes them.

According to a thirty-seventh aspect of the invention, there is provided a method, comprising:
a) projecting first radiation of one or more discrete frequencies toward a body and, if a first radiation signature is received, concluding that an amount A1 of material has been removed from the body; and
b) projecting a second radiation of one or more discrete frequencies toward the body and, if a second radiation signature is received, concluding that an amount A2 of material has been removed from the body.

According to a thirty-eighth aspect of the invention, there is provided an apparatus, comprising:
a) a carrier,
b) a sequence of indicators supported on the carrier, wherein
   i) some indicators produce a first type of optical signature when excited,
   ii) other indicators produce a second type of optical signature when excited, and
   iii) the indicators collectively contain encoded data.

According to a thirty-ninth aspect of the invention, there is provided a method of tracking a mobile substance, comprising:
a) placing a glass comprising a plurality of different oxides and a rare earth element adjacent or into the mobile substance;
b) illuminating the glass with predetermined excitation light;
c) searching over a spatial region for a predetermined optical signature, which is emitted by the glass.
The substance may be a fluid. The substance may be a liquid. The substance may be a body tissue.

According to a fortieth aspect of the invention, there is provided an apparatus, comprising:
a) a carrier; and
b) a composition of glass supported by the carrier, which
   i) produces an optical signature in response to predetermined excitation, and
   ii) which cannot be copied as a second composition of glass which produces said optical signature in response to said predetermined excitation.

According to a forty-first aspect of the invention, there is provided an apparatus, comprising:
a) a carrier; and
b) a composition of glass supported by the carrier, which
   i) produces an optical signature in response to predetermined excitation, and
   ii) which cannot be replicated by trial and error to produce said optical signature in response to said predetermined excitation, without at least 10,000 trials.

According to a forty-second aspect of the invention, there is provided an apparatus, comprising:
a) a carrier;
b) a body carried by the carrier which:
   i) comprises multiple oxides and a rare earth element; and
   ii) produces an optical signature in response to excitation.
The excitation may be optical. Characteristics of the optical signature may depend on the relative amounts of the oxides and the rare earth element. The excitation may comprise one or more optical excitation frequencies, and the optical signature may include at least one frequency, which is different from the excitation frequencies. The optical signature may include a characteristic intensity for at least one frequency in the signature. The signature may further include a characteristic time delay for at least one frequency in the signature. Increasing relative proportion of one oxide in the body by a sufficient amount may change the signature. Adding a new oxide to the body in sufficient amount may change the signature. Increasing relative proportion of the rare earth element in the body by a sufficient amount may change the signature. Adding a new rare earth element to the body in sufficient amount may change the signature.

According to a forty-third aspect of the invention, there is provided an apparatus, comprising:
a) a carner;
b) a body carried by the carrier which:
   i) comprises multiple oxides fused into a glass;
   ii) comprises one or more rare earth elements within the glass; and
   iii) produces an optical signature in response to excitation.
Characteristics of the optical signature may depend on the relative amounts of the multiple oxides and rare earth elements present in the glass. The optical signature may change if additional oxides are added to the glass in sufficient amount. The additional oxides may be added in a process which includes heating the glass. The additional oxides may be added in a process which includes fusing the glass. The excitation may be optical. Characteristics of the optical signature may depend on the relative amounts of the multiple oxides and rare earth elements. The excitation may comprise optical excitation frequencies, and the optical signature may include one or more frequencies, which are different from the excitation frequencies. The optical signature may include a characteristic intensity for at least one frequency in the signature. The signature may further include a characteristic time delay for at least one frequency in the signature.

According to a forty-fourth aspect of the invention, there is provided an optically detectable security marker for emitting light at a pre-selected wavelength, the marker comprising:
a rare earth dopant; and
a carrier incorporating the rare earth dopant, the interaction of the carrier and
the dopant being such as to provide a fluorescent fingerprint that is different from that of the rare earth dopant.
The rare earth dopant may be a lanthanide. The carrier may comprise a glass or a plastic. The carrier may comprise a glass or a plastic. The dopant and the carrier material may be such as to cause emission of visible light in response to optical excitation by visible light.

According to a forty-fifth aspect of the invention, there is provided an item having an optically detectable security feature for emitting light at a pre-selected wavelength, the item comprising:
a rare earth dopant; and
a carrier incorporating the rare earth dopant, the interaction of the carrier and
the dopant being such as to provide a fluorescent fingerprint or response that is different from that of the rare earth dopant.
The item may be a fluid. The item may be a laminar media item. The security feature may comprise a plurality of security markers, each marker emitting at a different pre-selected wavelength. The markers may have different concentrations of dopant or dopants, so that the intensities of the pre-selected wavelength emissions are different. The emission from each marker may decay over a different time period. The emission from each marker may decay over a different time period.

According to a forty-sixth aspect of the invention, there is provided a system for validating an item having an optically detectable security feature emitting light at one of a plurality of pre-selected wavelengths, the security feature having a carrier incorporating a rare earth dopant, the system comprising:
means for illuminating the security feature with one or more wavelengths for producing emissions from the rare earth dopant;
means for detecting emission from the security feature at a pre-selected wavelength;
means for comparing the detected emission with a security profile for the item;
means for the electronic selection of photodiode signals based on the fluorescent lifetime of a detected signal corresponding to the emitted radiation from the security feature; and
means for indicating a successful validation in the event of the emission matching the security profile.
The means for illuminating the item may comprise a pulsed light emitting diode and an illumination filter for ensuring that only a narrow band of wavelengths illuminate the item.
The means for detecting emission may comprise a detection filter to filter out all wavelengths except the pre-selected wavelength, and a photodiode to detect the intensity of light passing through the detection filter. The means for electronic selection of the photodiode signal may comprise an electronic filter to filter out all signals except pre-selected signals corresponding to the long-lived rare earth fluorescent emissions.

According to a forty-seventh aspect of the invention, there is provided a method of validating an item having an optically detectable security feature emitting light at one of a plurality of pre-selected wavelengths, the method comprising the steps of:
illuminating the security feature with one or more wavelengths for producing emissions from the rare earth dopant;
detecting emission from the security feature at a pre-selected wavelength;
comparing the detected emission with a security profile for the item;
detecting and comparing electronic signals from a photodiode based on the fluorescent lifetime of a detected signal corresponding to the emitted radiation from the security feature; and
indicating a successful validation in the event of the emission matching the security profile.

According to a forty-eighth aspect of the invention, there is provided an optical scanner, comprising:
means for illuminating a sample;
means for detecting radiation produced by the sample in response to the illumination; and
means for classifying the sample into one of a plurality of categories, based on the radiation.
The optical scanner may further comprise a support for positioning a sample at an interrogation station. The optical may further comprise a projector for projecting one or more frequencies of excitation radiation toward the interrogation station. The support may be configured to receive a carrier in which the sample is contained. The carrier may contain more than one sample. The support may comprise means to selectively position each sample at the interrogation station. The projector may project a single excitation frequency at any given time. The projector may project multiple excitation frequencies in sequence over time. The interrogation station may be external to the scanner. The interrogation station may be internal to the scanner. The scanner may be portable, and may contain a trigger for actuating the projector. The means for detecting radiation may comprise a detector for detecting a sample signature produced by the sample in response to the excitation radiation, and the scanner may further comprise means for storing a reference signature, and means for comparing the reference signature with the sample signature and, if they match, issuing a signal. The optical scanner may further comprise a reference material accessible to the scanner, which produces a reference signature when excited by the projector.

According to a forty-ninth aspect of the invention, there is provided a method of optical scanning, comprising the steps of:
positioning a non-crystalline sample at an interrogation station;
positioning a reference material at a reference station;
projecting a set of frequencies of excitation radiation toward the interrogation station;
projecting the set of frequencies of excitation radiation toward the reference material;
detecting a sample signature produced by the sample in response to the set of frequencies; and
detecting a reference signature produced by the reference material in response to the set of frequencies.

Several methods for doping standard glass compositions with the selected fluorescent rare earth ions can be employed. As used herein, the word "dopant" refers to (i) additives (for example rare earth elements) introduced to the carrier components before the carrier (for example, glass) is produced, so that when the carrier is produced it contains the additives, which is referred to herein as a "pre-production dopant"; and/or (ii) additives introduced to the carrier after the carrier is produced, so that the carrier is produced without the additives present, which is referred to herein as a "post-production dopant". Thus, the term dopant covers additives introduced before (pre-production) or after (post-production) the carrier is produced.

In one method, test samples of doped glass are prepared by the incorporation of the rare earth ions into the batch composition using the appropriate metal salt. The glass is prepared by heating the batch in a platinum crucible to above the melting point of the mixture. In another method, existing standard glass samples are powdered and mixed with solutions of the fluorescent ions. The glass is lifted out of the solvent, washed and then oven dried.

An example of a glass that could be used as the carrier material for the rare earth dopants is a borosilicate based glass. In particular, a glass that could be used is as follows: SiO₂ 51.79 wt%; NaO 9.79 wt%; CaO 7.00 wt%; MgO 2.36 wt%; Al₂O₃ 0.29 wt%; FeO, Fe₂O₃ 0.14 wt%; K₂O 0.07 wt%, and B₂O₃ 28.56 wt%. This can be made by ball milling soda lime beads (100µm) for 5 minutes to create a powder to help melting and mixing. Then 5g of the crushed soda lime beads, 2g of the B₂O₃ and 3mol% of the rare earth dopant, for example Europium, Dysprosium and Terbium but also others, are ball milled together for, for example, 3 minutes. The resulting powder is then put in a furnace and heated up to 550C. It is left in the furnace at this temperature for about 30 minutes, to ensure that the boric oxide is completely melted. Then the temperature is increased to 1100C for 1 hour to produce a homogeneous melt. The temperature is increased again to 1250C and the molten glass is poured into a brass mould, which is at room temperature, which quenches the glass to form a transparent, bubble free borosilicate glass, doped with rare earth ions.

The peak emission wavelength for fluorescent emission in the marker depends on the energy levels of the final rare earth doped glass. Altering the weight percentage of the network modifier oxides within the glass matrix will change these levels and hence change the observed peak fingerprint. Hence, to observe the correct wavelength fingerprint, the glass composition has to be known. Likewise, where two or more rare earth dopants are used, varying the ratios, by mole percentage, of these changes the fluorescence intensity in the detected signal. Peak intensities can be used as part of an encoding scheme and so by varying the dopant levels, there is provided an opportunity to provide even more encoding options.

### Brief Description of the Drawings

Figure 1 illustrates processing which produces one form of the invention.
Figure 2 illustrates four excitation wavelengths 10, and the response produced by each, under one form of the invention.
Figure 3 illustrates an excitation frequency F1 and a response frequency F2.
Figure 4 illustrates decay over time of response frequency F2.
Figure 5 illustrates a time delay DEL-T which can exist between the excitation frequency F1 and the response frequency F2.
Figure 6 illustrates sequential excitation by four excitation frequencies.
Figure 7 illustrates part of a database according to one form of the invention.
Figure 8 illustrates a prior-art table of energy levels of various dopants in silicon.
Figure 9 illustrates a computer 55 storing database 50, which is accessible by a remote computer 65.
Figure 10 illustrates one form of the invention, implemented in connection with a photocopier.
Figure 11 illustrates a varnish 155 in which are suspended glass particles 150 of the type described herein.
Figure 12 illustrates a coating 175 on an article 170, which coating 175 contains glass particles 150.
Figure 13 illustrates a carrier 210 supporting a glass fragment 215.
Figure 14 illustrates a carrier on which the glass beads can represent data.
Figure 15 illustrates a kit according to one form of the invention.
Figure 16 illustrates a scanner according to one form of the invention.
Figure 17 is a block diagram of a detector arrangement;
Figure 18 is a table showing various excitation wavelengths and corresponding emission wavelengths for a Europium dopant in a borosilicate based glass, and

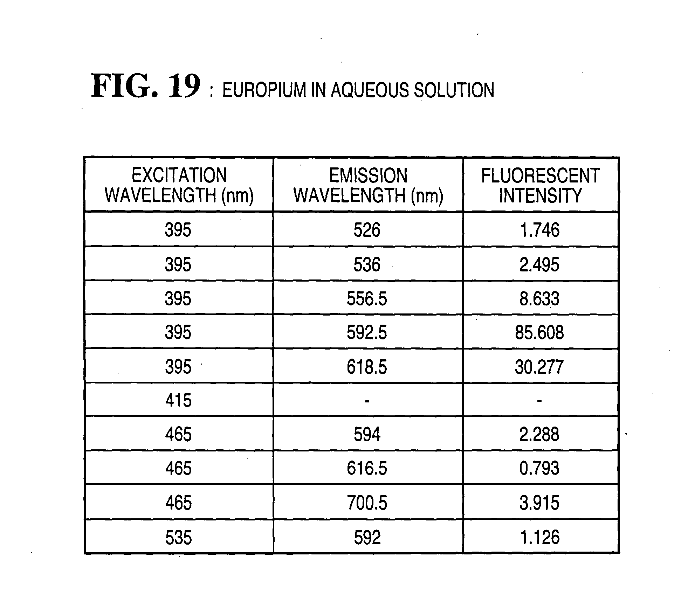

Figure 19 is a table similar to that of Figure 2 for Europium, but in solution.

### Detailed Description of the Invention

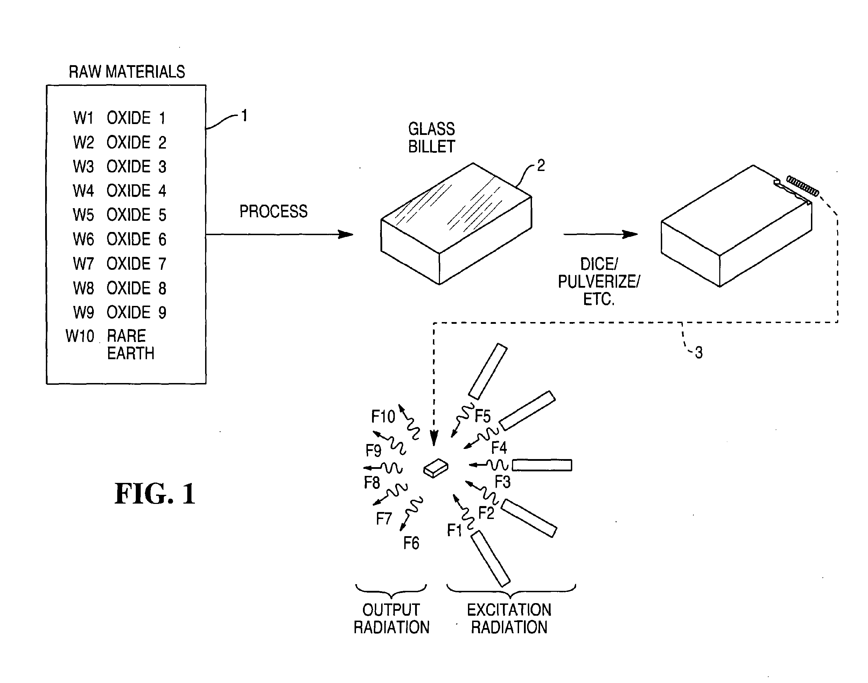

Block 1 in Figure 1 illustrates a collection of two types of raw materials: (1) a group of oxides and (2) one or more rare earth elements. The labels W, such as W1, indicate that each raw material is present in a specific weight. Thus, the collective labels W1 - W10 indicate a specific composition, by weight, of the raw materials.

The raw materials undergo heat treatment and possibly annealing, as indicated by the arrow labeled PROCESS, to produce a glass billet 2. The glass billet 2 is then cut into dice, or pulverized, as indicated by the arrow labeled DICE/PULVERIZE/etc.

Arrow 3 points to a block which represents one of the dice, or a collection of the powder. In the general case, when the block 3 is excited by radiation, indicated by frequencies F1 through F5, the block 3 will re-radiate specific frequencies, indicated by frequencies F6 through F10.

The specific re-radiated frequencies, and also properties of those re-radiated frequencies, are unique to the specific glass billet 2. The properties of the re-radiated frequencies are described in detail below, but include (1) intensity of each re-radiated frequency and (2) decay rate of each re-radiated frequency.

To repeat, in general, if the relative weights W are altered, different re-radiated frequencies, with different properties, will be detected. Also, if the heat treatment, annealing, or both, of the glass billet 2 are changed, then different re-radiated frequencies, with different properties, can also be detected, even if the compositions of two billets 2 are identical.

Therefore, in the general case, the re-radiated frequencies and their properties, obtained from a given set of excitation frequencies, depend on (1) the composition that is, the relative weights W, (2) the heat treatment, and (3) the annealing (if any) of the glass billet 2.

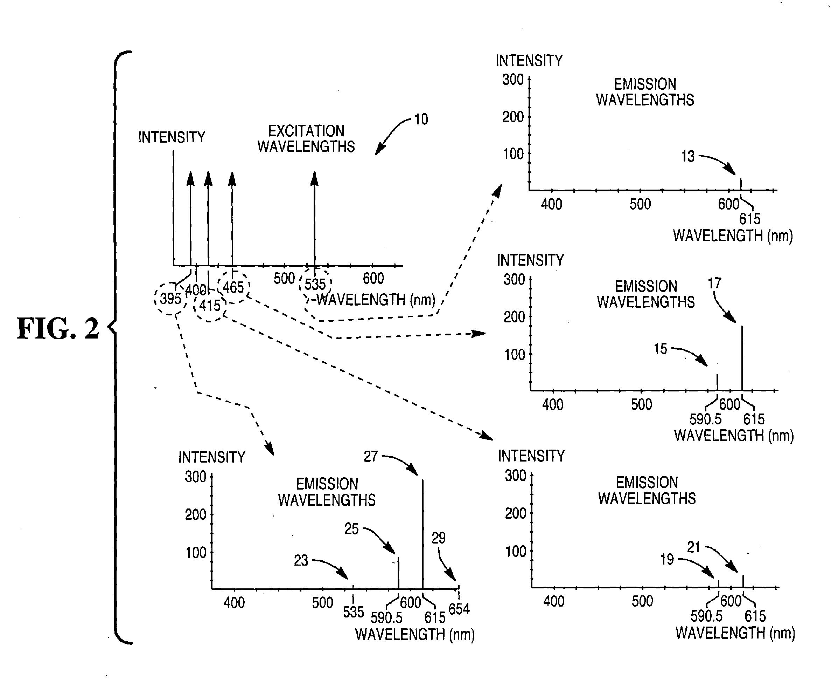

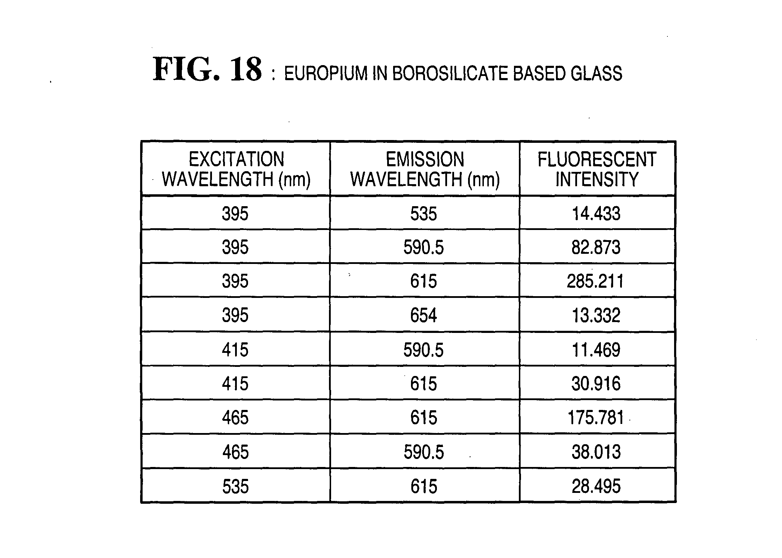

Figure 2 illustrates a generalized example of the response of a particular glass billet, and is based on Figure 18, described later. Image 10 indicates four excitation wavelengths, at 395, 415, 465, and 535 nanometers, nm. For the glass billet in question, the 535 nm excitation produces wavelength 13, of relative intensity indicated. The 465 nm excitation produces wavelengths 15 and 17, of relative intensities indicted.

The 415 nm excitation produces wavelengths 19 and 21, of relative intensities indicated. The 295 nm excitation produces wavelengths 23, 25, 27, and 29, of relative intensities indicated. Figure 18 sets forth the relative intensities more precisely, in numerical form.

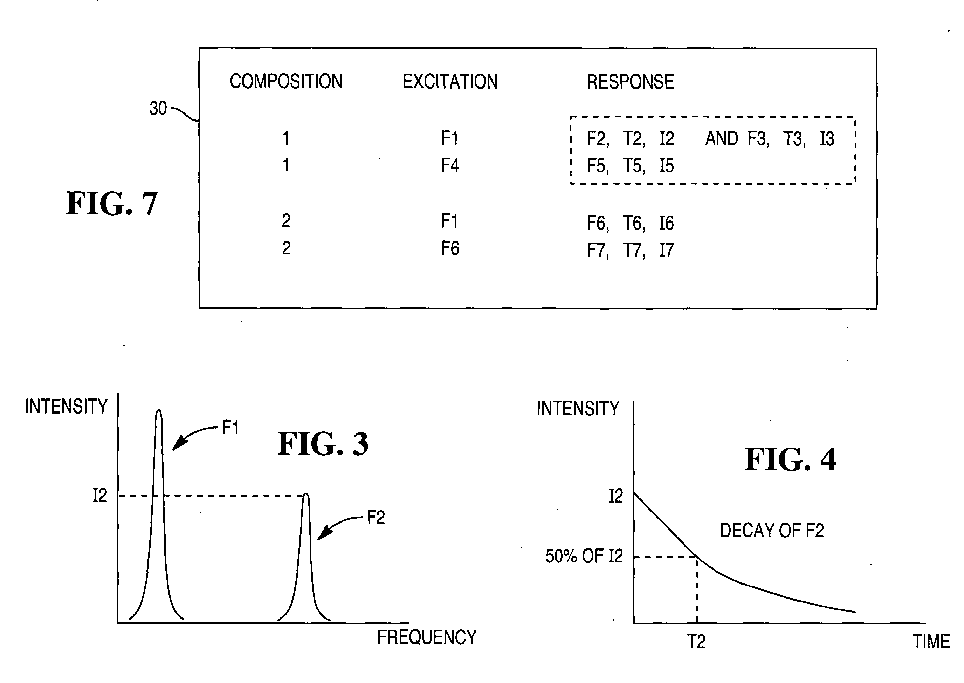

Figure 3 illustrates the general principle that an excitation frequency F1 will produce at least one re-radiated, or output, frequency F2. Frequency F2 will be characterized by an initial intensity, indicated by I2. Also, as indicated in Figure 4, output frequency F2 will be characterized by a decay time, such as T2, which is the time required to decay to 50 percent of its initial value.

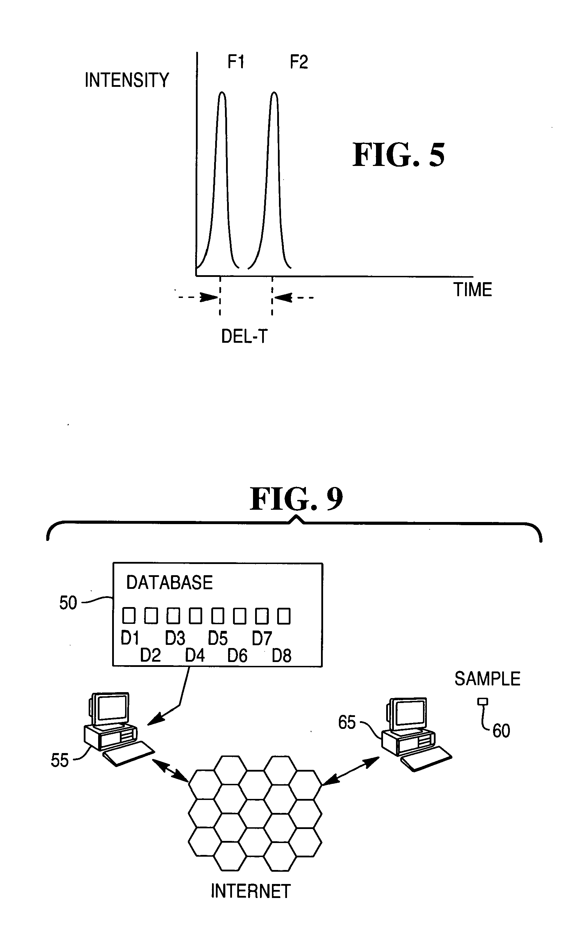

In addition to the decay time T2, another time interval may be present, such as that shown in Figure 5. The output frequency F2 can occur after a time interval DEL-T following the excitation frequency F1. This delay time DEL-T may also be a property of the output frequency F2, and used to identify the glass billet.

In addition, the delay time DEL-T can be used to solve a particular problem which can arise. The Inventors point out that, in Figure 2, the excitation wavelength of 395 nm produces an output wavelength of 535 nm. However, that output corresponds to an excitation wavelength of the same value. Thus, if the four excitation wavelengths in image 10 were applied simultaneously, a problem could arise in determining whether a detected signal at wavelength 535 nm was caused by the excitation at that wavelength, or by response 23.

One solution to this problem is to utilize the time delay DEL-T of Figure 5. The excitation wavelengths are first applied, allowed to decay, and then a detector is activated after DEL-T expires. Then it is known that, if a signal at wavelength 535 nm is detected, it is not due to an excitation at that wavelength.

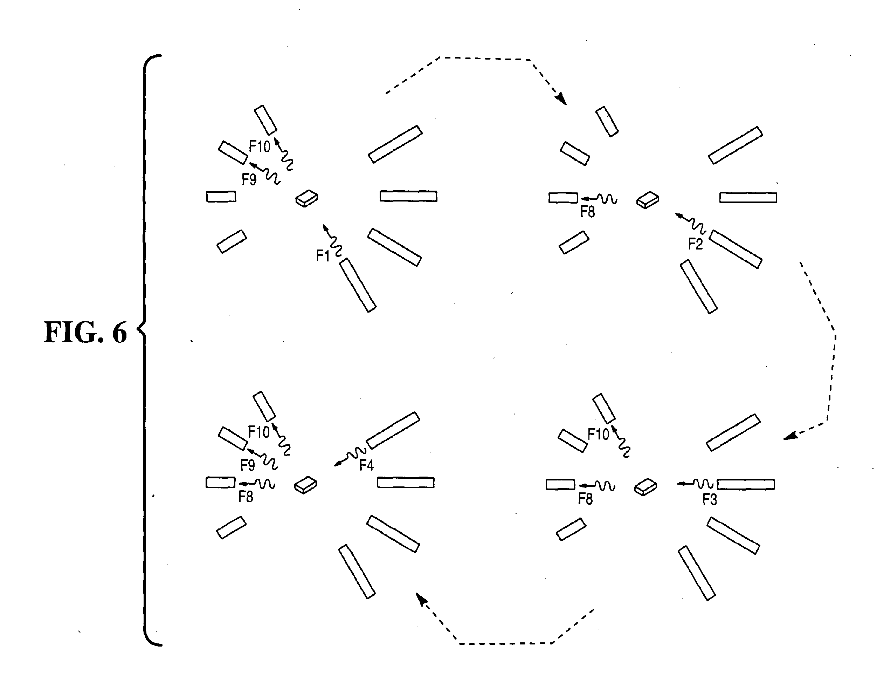

In addition, another solution to the problem would be to sequentially apply the excitations, as indicated by the sequence F1 through F4 in Figure 6. When each excitation of a specific frequency is applied, a detector looks for a response, either at the same time, or after a delay such as DEL-T in Figure 5.

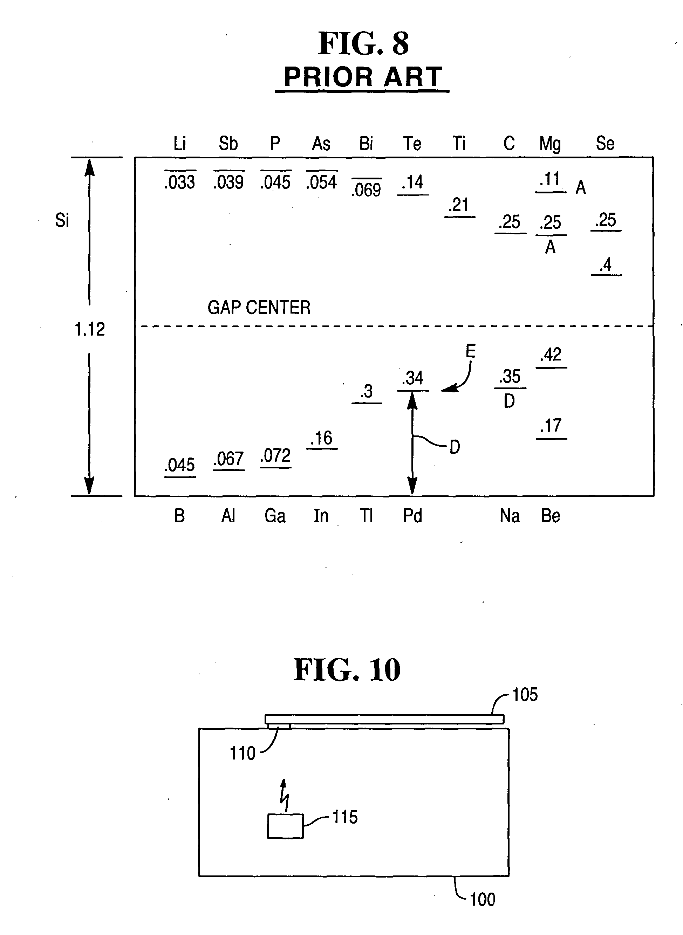

The principles just described can be used to construct a database 30 in Figure 7. The column labeled COMPOSITION refers to a specific billet, which contains a specific set of relative percentages of components, and which was subjected to specific heat treatment and annealing, or other specific processing.

Heat treatment refers to the time-temperature history of the billet in fusing the oxides and the rare earth element(s) together. Annealing refers to the time-temperature history of the billet following heat treatment. Of course, in some cases no annealing may be used, or air quenching can be viewed as the annealing.

The column labeled EXCITATION refers to the frequency of excitation applied to the billet, or sample of the billet. In the case of COMPOSITION 1, two excitation frequencies

### F1 and F4 are indicated.

The column labeled RESPONSE refers to the frequency, decay time, and initial intensity of signals re-radiated in response to the excitation frequency. For example, in the case of COMPOSITION 1, the excitation frequency F1 produces re-radiated light of frequency F2, initial intensity I2, and decay time T2 and also re-radiated light of frequency F3, initial intensity I3, and decay time T3.

In addition, Excitation frequency F4 produces re-radiated light of frequency F5, initial intensity 15, and decay time T5.

Of course, the specific definitions of intensities, such as 15, and decay time, such as T5, are here chosen for convenience. Other definitions are possible, and values other than initial intensity and 50-percent-decay-time can be used.

Also, if a delay time, such as DEL-T in Figure 5, is found significant for a particular billet and excitation frequency, that delay time can be included in the database, and is deemed represented by the times such as T2, T3, and so on.

The collection of responses are viewed as a signature which identifies each billet. For example, the responses in dashed box 33 represent one signature of a billet of composition 1. Of course, a sub-set of the contents of box 33 could be used. For example, the excitation frequency F1 could be used, and frequency F4 could be eliminated.

Several significant features which distinguish the glass dice 3 of Figure 1 from taggants in the prior art are the following.

One is that, at the present time, it is difficult to reverse-engineer the dice. That is, it is difficult for one to excite the glass as indicated in Figure 2, detect the output signature, and then fabricate a glass which produces that output signature. One reason is that a complete database of the type shown in Figure 7 is not known to exist. That is, a complete database which covers all possible compositions of glass billets, and their signatures, is not known to be available in the published literature, including printed publications as defined by 35 USC section 102.

This fact distinguishes the invention from systems which may appear to be similar, but are not. For example, silicon, a crystal, can be doped with different elements. The doped silicon can then be excited, and radiated light of frequency corresponding to the doping element will be detected. Based on the frequency of the re-radiated light, one can consult known tables, and determine the identity of the dopant. Figure 8 illustrates such a table. The frequency of re-radiated light will depend on the drop in energy D experienced by an electron, and that drop will depend on the energy level E created by the dopant. One can thus reproduce the silicon-dopant system, based on the table.

However, to repeat, such tables are not known to exist for the glass systems in question.

A second feature is that the glass systems in question are not crystalline. Glasses, in general, are supercooled liquids, they are not crystals. Thus, an energy level system corresponding to that of Figure 8 is not present or, if present, is different for the different glasses described herein.

A third feature is that some glasses are classified as refractory materials. Dice, or powders, of such glasses can withstand high temperatures. Such glasses are unaffected by temperatures of 400, 500, 700, 1000 degrees F, and higher. This distinguishes them from most, if not all, fluorescent inks and paints, and the surfaces to which the inks and paints are applied.

Several applications of the glasses under consideration will be discussed.

In Figure 9, a database 50 is stored in a computer 55. The database 50 is generated by a glass foundry (not shown) which fabricated a billet 2 in Figure 1 of glass. The glass foundry subjected the billet, or fragments of it, to various excitation frequencies, and measured the signature of the glass. Data concerning the glass, such as the composition, heat treatment, annealing, excitation frequencies and resulting signatures, are stored in the database 50, and indicated by blocks D1 - D8. The identity of the foundry can be included in the data.

The glass foundry can repeat the process for another billet of glass, of different composition.

A user (not shown) would test a sample 60 of the glass billet. For example, the sample may be attached to a specific article (not shown). The user would apply excitation frequencies to the sample 60, and obtain a signature of the sample 60. Figure 2 illustrates generalized excitation frequencies in image 10, and the signature which results.

The signature obtained can be represented as a collection of data, which the user transmits to the computer 55 in Figure 9, over the INTERNET, using the user's own computer 65. As database 30 in Figure 7 indicates, knowledge of the signature allows one to ascertain the composition of the glass from which the sample 60 in Figure 9 originated, or any data associated with the data in the database, such as the identity of the foundry which fabricated the glass.

In addition, other information can be included in the database 50 in Figure 9. For example, a billet having a given signature can be transferred to a specific party, such as a government. That party can be identified in the database 50, in connection with the data regarding the billet.

As a more specific example, fragments of the billet can be pulverized and added to an ink which is used to print currency. If a sample 60 in Figure 9 is taken from the currency, and points to the specific billet, then it is known that the currency is associated with the billet delivered to the particular government.

Thus, in general, a sample 60 in Figure 9 of a billet can be used to trace the origin of the sample. Or database 50 in Figure 9 can indicate the original owner of the billet from which the sample 60 is derived.

In another application, the glass can be used to suppress counterfeiting or copying. Block 100 in Figure 10 represents a photocopier. Block 105 represents a sheet to be copied, which can take the form of a visual image on a paper carrier. Block 110 represents a fragment of the glass attached to the carrier.

Block 115 represents a detector, which illuminates the sheet 105 at the copying station, and thereby illuminates block 110, the fragment of glass. If block 110 produces a particular signature, then the detector 115 blocks copying, so that the photocopier 100 will not copy the sheet 105.

Alternately, the system could be designed so that only sheets bearing an authorizing block 110 can be copied. Thus, if the proper signature is detected, copying is allowed, and ordinary sheets lacking a block 110 cannot be copied.

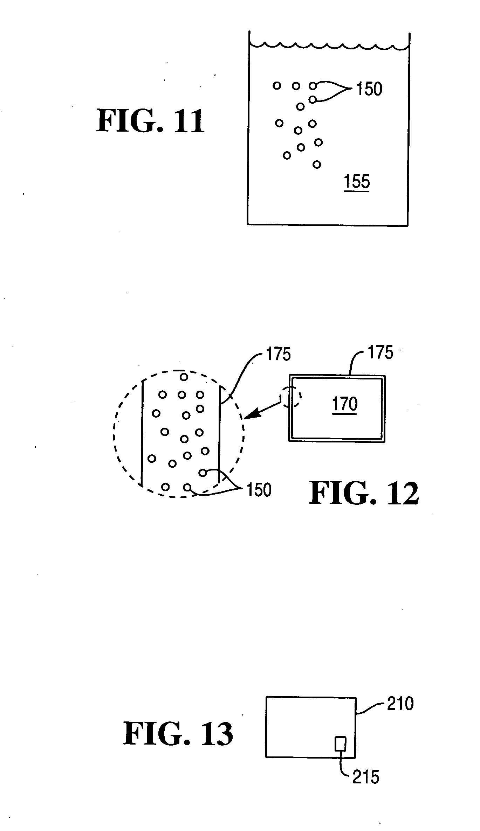

In another application, fragments 150 of the glass in Figure 11 are added to a liquid carrier 155, such as a varnish. In one embodiment, the fragments take the form of a fine powder, and have no dimension larger than, say, one micron, five microns, ten microns, fifteen microns, or twenty microns. In one embodiment the powder is sufficiently fine that the granules are invisible to the naked eye. In another embodiment, the grains of the powder are approximately the size of the grains of common table salt.

The liquid carrier is painted onto an article, represented by block 170 in Figure 12, forming a coating 175. The signature of the particles can be detected in the manner described above, and the database 50 in Figure 9 can be used to deduce information about the article 170.

Significantly, in some cases, the article 170 can perform a function, the particles do not interfere with that function, and the function can be performed if the particles are not present. For instance, if the article 170 is a handgun, the particles do not interfere with the function of the handgun, and the particles need not be present for that function to exist.

In another application, it is not necessary to consult a database. A detector, as described herein, can be equipped with data which indicates a signature of fragments from a glass billet. Or the data can indicate multiple signatures, for multiple billets.

In use, an article 210 in Figure 13, which carries a glass fragment 215, is submitted to the detector 200 in Figure 13. The detector 200 obtains the signature of the fragment 215 and, if the signature matches a stored signature, the detector thereby deduces information about the article 210. Such information can relate to authenticity, origin, ownership, information about the article 210, or any other characteristic which possession of a fragment 215 having a predetermined signature can represent.

For example, the article 210 can take the form of a document, item of fine art, a label, a registration plate or card for a vehicle or other item commonly registered with a government, a written signature or fingerprint carried on a card, or a storage medium such as a CD or floppy disc. If the fragment 215 displays a specific signature, then that signature indicates that the article 210 may be copied, or is prohibited from being copied, as appropriate.

As another example, since different billets of glass produce different signatures, those signatures, or the corresponding billets, act as identification numbers. These ID-glasses can be attached to, or embedded in, articles to indicate ownership. This concept is applicable to articles such as items of fine art, precious metals and jewelry, human tissues such as organs, semen, and blood, and certificates.

As a specific example, an ID-glass can be inserted into a body fluid which is to be tested for illness, or presence of drugs or alcohol. The ID-glass, being inert to most common reagents, will not affect the test results, except perhaps by contaminating an optical test, which would be rare. The ID-glass identifies the owner of the fluid.

As another example, an ID-glass can identify origin of an article, and thus provide authentication. As a specific example, this can apply to items of fine art, liquors, perfumes, human tissues, admission tickets, entertainment recordings such as video tapes and discs.

As another example, the ID-number feature of the ID glass can be used to classify articles or substances. As a specific example, ten different ID-glasses, with ten different signatures, can be fabricated. These can be used to distinguish ten ostensibly identical, yet different, articles. For example, contact lenses look identical, but are different. A tiny ID-glass at the edge can identify the contact lens. A similar principle applies to blood type, pharmaceuticals, chemicals, and so on.

A similar identification can perform a trademark-like function, in identifying authentic goods. Without limitation, this would apply to toner cartridges, fuels, tires, and any fungible articles in which the identity of the manufacturer or supplier is important.

As another example, the ID-glass can be used to track articles. For example, a fuel tank at a gasoline filling station may acquire a leak. If an ID-glass powder is added to the tank, the powder will migrate to the leak and escape. A detector can be used to elicit the powder to display its signature, to locate the leak.

This tracking function can be applied to people, animals, weapons, explosives, medical instruments, pollutants, and watercourses. It can also be applied to any article or substance generally which moves, and which motion is to be followed, such as blood in the human circulatory system and food in the human digestive system.

In the case of treating the article 210 as a human, the tag 215, if exhibiting the proper signature, can act as an admission permit or key. Thus, tag 215 can grant admission to places or buildings. Or tag 215 can grant permission to use specific equipment.

In another application, article 210 of Figure 13 can represent a person or other living being. A fragment 215 having a predetermined signature can represent a specific characteristic, such as color-blindness.

In another application, the article 170 in Figure 13 bears no visible tags, yet the coating exhibits the signature when excited. Alternately, the coating is applied only in a concealed location on the article 170.

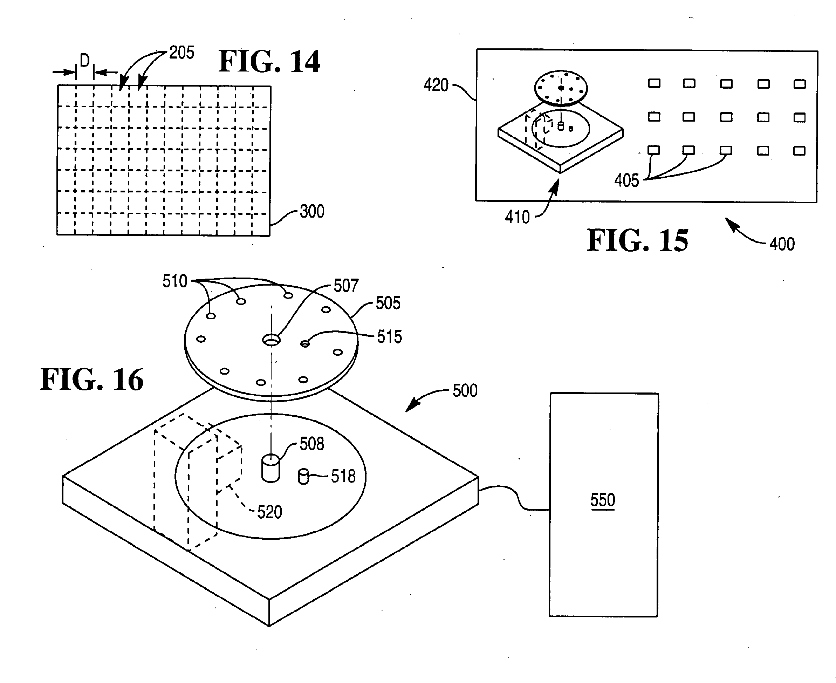

In another application, the glass fragments can cooperate with each other to provide information. For example, Figure 14 illustrates a card 300, upon which is superimposed an imaginary grid. Distance D is pre-established by convention. If a glass fragment is positioned within a cell 205 of the grid, that cell is treated as a logical ONE. If a cell 205 is empty, that is, devoid of a glass fragment, then that cell is treated as a logical ZERO.

A reader (not shown) begins at a pre-established starting point, advances in steps of distance D, and determines whether a ONE or ZERO is present. A binary encoding system is thus established.

Alternately, glass fragments having two different signatures are used. Now the need to advance in units of D is eliminated, but can still be used if desired. If the two different signatures are A and B, then the sequence AABAABBB can be treated as 11011000, which is another system of binary encoding.

This principle can be extended. If N types of glass fragment are used, having N different signatures, then an alphabet of N characters is thereby made available.

In another embodiment, the glass fragments can be used to ascertain abrasion or wear. For example, assume a laminated material, having five layers. Five different glasses are used, having five different signatures. Glass 1 is embedded in layer 1. Glass 2 is embedded in layer 2, and so on.

Prior to any wear occurring, only the glass in the outermost layer can be detected by its signature. After the outermost layer is abraded away, then the glass in the next layer can be detected, and so on.

In another embodiment, a kit is provided. The kit 400 in Figure 15 contains a number of glass beads 405. A detector 410 is provided, such as that described in connection with Figure 16, and it detects the specific signature of the glass beads 405. In ordinary practice, the detector 410 will be dormant when contained within the kit 400. All components of the kit 400 are contained in a common package, such as a thermo-formed blister pack.

The detector 410 can compare the signature obtained from a sample bead 405 with stored data indicating that signature. Or the detector 410 can be equipped with its own bead, and it compares the signature of that bead with the signature of a sample bead 405.

In another embodiment, multiple different ID-glasses are contained in the same article. The composite signature of all ID-glasses can be used for the purposes described herein.

In one embodiment, one billet of glass is fabricated and its signature is ascertained. This is repeated for numerous billets, to develop a database of glasses and their signatures.

In one approach, every time a new billet is fabricated, its signature is compared with existing signatures in the database. If the new signature does not deviate sufficiently from an existing signature, the corresponding billets are treated as interchangeable. Since the signatures can be, in effect, treated as numbers, a simple formula can be used to define similarity between signatures. For instance, if one signature has an intensity I, then another signature having an intensity of 0.95I can be defined as similar.

In one embodiment, no database is used. A glass foundry fabricates a billet of glass, ascertains its signature, divides the billet into fragments or powder, and delivers the fragments/powder to a customer. The foundry may include data indicating the signature. Or the customer may rely on his own testing to deduce the signature. But the foundry does not retain data indicative of the signature, or if it does retain such data, keeps it secret. Or the data is not available in a printed publication as defined in 35 USC section 102.

Thus, the customer obtains a collection of ID-glass fragments which, as a practical matter, are difficult to replicate. Or at least difficult to replicate by trial and error without undertaking 10,000 trials, which is considered an impractical number.

The number of 10,000 is obtained as follows. Assume that the glass contains eight components. Assume that the final billet can contain 1, 2, 3, ... 10 grams of each component. Under these assumptions, the final billet can weigh from eight grams (one gram of each component) to 80 grams (ten grams of each component), and any integral number of grams in-between.

The total number of permutations of components is 10 raised to the eighth. Of course, the permutation 1-1-1-1-1-1-1-1 (one gram of each component) represents the same composition as 2-2-2-2-2-2-2-2 (two grams of each component), because the relative percentages of ingredients are the same. A similar comment applies to multiples: 1-2-1-1-1-1-1-1 has the same relative percentages as 2-4-2-2-2-2-2-2.

Nevertheless, these identical cases represent a very small fraction of the total number of possibilities. In this example, of the ten-to-the-eighth (or 100 million) there certainly exist at least 10,000 different compositions, having 10,000 different signatures, and at least 10 million different compositions, having 10 million different signatures.

Thus, when a glass billet is fabricated using eight different components, in effect, a composition is selected from 10,000 possibilities, or 10 million possibilities, depending on how counting is done.

A given composition, producing a given signature, is difficult to copy to produce an identical composition which produces the same signature, for several reasons. One is that the heat treatment and annealing (if any) affect the signature, and those processing parameters are not apparent from the composition, at least not under current technology.

A second reason is that the approach would typically be based on trial-and-error. However, as just explained, for eight ingredients, the number of trials required can run into the millions. Further, a trial-and-error approach does not actually amount to copying: the original composition is not copied, but numerous trials are undertaken in pursuit of a composition having a similar property as the original. That is not copying.

Figure 16 illustrates a scanner 500, and a disc 505, having a central hole 507, which engages with an axle 508. The disc 505 which carries a collection of glass beads 510. The disc 505 contains an indexing hole 515, which engages with an indexing pin 518, which allows the scanner 500 to position a desired one of the glass beads at a scanning station indicated by dashed box 520.

For example, assuming that a top side of the disc 505 is defined, then the beads 510 can be identified by their rank (first, second, third) in the clockwise direction relative to the indexing hole 515.

Of course, the disc 505, or other carrier, may carry a single bead 510.

Scanner 500 may be controlled remotely, as by a computer 550, which selects a specific bead 510, or sequence of beads 510, for scanning. Thus, a sequence of signatures can be arbitrarily generated, to thwart hackers who wish to synthesize the signatures.

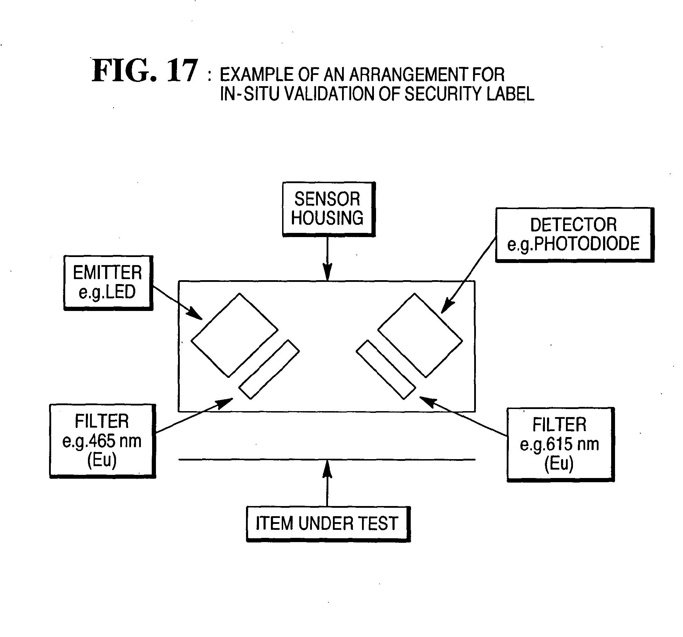

Figure 17 shows an arrangement for detecting information encoded in accordance with the present invention. This includes a sensor and a platform for supporting an item under test. The sensor has a housing in which are provided an emitter, for example a light emitting diode (LED), at the output of which is provided a narrow band filter. The narrow band filter allows only a very narrow, pre-determined range of wavelengths to be passed. As an example, the filter could be selected to allow a narrow band pass centered on a wavelength of 465nm to pass through it and toward the sample platform. Adjacent to the emitter is a detector, such as a photodiode. At its input is a narrow band filter that allows only a very narrow, pre-determined range of wavelengths to pass through it. As an example, the filter could be selected to allow light centered on a wavelength of 615nm to reach the detector.

In use of this arrangement, light is emitted from the emitter and passed through the first narrow band filter and onto a security item that carries or includes the marker. This light is absorbed by the rare earth dopant, which if it matches the energy levels of the dopant and carrier used causes it to fluoresce. Light emitted from the item is transmitted towards the second filter, and from there, to the detector. Also the emission from each marker decays over a different time period. By virtue of this feature, the time over which an emission occurs for a particular wavelength can be used as part of a security profile. For authentic documents, the light received at the detector should have one or more characteristic features that can be identified. In the event that the detected response has the expected features, the item is identified as being bona fide. In the event that the response is not as expected or is not within an acceptable range of the expected response, the item is identified as being a potential counterfeit.

The spectral emissions of various marker samples have been investigated. As an example, Figure 18 shows a table of the emission wavelengths and intensities for various different excitation wavelengths for a marker comprising of 3mol% EuCl3 when included in the borosilicate glass described above.

By way of comparison, Figure 18 shows the corresponding results for the EuCl₃:6H₂O dopant, but when in solution. From these Figures, it can be seen that in glass the most significant excitation is at 395nm, which emits at 615nm and 590.5nm. The corresponding results for the EuCl₃:6H₂O in solution shows that the emission wavelengths here are 592.5nm, 618.5nm, 556.5nm, 536nm and 526nm. Hence the spectral response of the marker at 395nm is significantly different from that of the EuCl₃:6H₂O in solution. Also in glass, for excitation at a wavelength of 415nm, there is an output of 615nm and 590.5nm. In contrast for the EuCl₃:6H₂O in solution there is effectively no fluorescence at this wavelength. Again, this demonstrates that there is significant and measurable difference caused by the incorporation of the EuCl₃:6H₂O in the borosilicate carrier.

Because rare earth ions have well defined and relatively narrow, non-overlapping spectral bands, this means for many applications it is possible to detect the security marker using a single discrete pre-determined excitation wavelength and likewise a single discrete pre-determined detection wavelength. For example, for the EuCl₃ doped borosilicate glass described above, the emitter filter could be selected to be 465nm, and the detector filter could be 615nm. Alternatively, a plurality of stimulating wavelengths could be used. To do this, a number of different suitable emitter filters would be selected, and a plurality of corresponding filters. These would be included in the arrangement of Figure 1 to allow the simultaneous measurement of optical response at various different wavelengths.

A further advantage of the discrete nature of spectral response of rare earth ions is that a number of species can be combined into the one product for improved security for example 3 mole % Eu + 3 mole % Tb, not precluding other rare earths at different percentages and more than two. Because the response of the various different dopants is relatively discrete, detection of these is simplified. The narrow emission bands also facilitate the spectral selection of the molecules, making the detection system simpler than those required for systems containing multiple dyes. A further advantage is that many rare earth ions require excitation at wavelengths conducive to existing laser diode technologies. This makes in situ excitation possible because the excitation source is compact, robust and long lived.

Furthermore, incorporating the rare earth dopants into a suitable carrier, and in particular the glass beads described herein, means that the security marker in which the invention is embodied is extremely stable under adverse chemical, environmental and physical abrasion conditions, thereby ensuring that it has a long lifetime compared to conventional dyes.

A skilled person will appreciate that variations of the disclosed arrangements are possible without departing from the invention. For example, whilst only a few rare earth ions have been specifically described, it will be appreciated that there is a wide range of fluorescent rare earth ions that could be used. The number of permutations available is therefore greatly enhanced. In addition, whilst some rare earth ions emit in the UV and IR ranges, it is preferred for some applications that both the excitation radiation and the emitted radiation are within the visible range, that is within a wavelength range that is visible to the unaided human eye. Accordingly, the above description of a specific embodiment is made by way of example only and not for the purposes of limitation. It will be clear to the skilled person that minor modifications may be made without significant changes to the operation described.

## Claims

1. An optical scanner, comprising:
means for illuminating a sample;
means for detecting radiation produced by the sample in response to the illumination; and
means for classifying the sample into one of a plurality of categories, based on the radiation.

2. An optical scanner according to claim 1, further comprising:
a support for positioning a sample at an interrogation station.

3. An optical scanner according to claim 1 or 2, further comprising:
a projector for projecting one or more frequencies of excitation radiation toward the interrogation station.

4. An optical scanner according to claim 2 or 3, wherein the support is configured to receive a carrier in which the sample is contained.

5. An optical scanner according to claim 4, wherein the carrier contains more than one sample.

6. An optical scanner according to claim 5, wherein the support comprises means to selectively position each sample at the interrogation station.

7. An optical scanner according to any of claims 3 to 6, wherein the projector projects a single excitation frequency at any given time.

8. An optical scanner according to any of claims 3 to 6, wherein the projector projects multiple excitation frequencies in sequence over time.

9. An optical scanner according to any of claims 2 to 8, wherein the interrogation station is external to the scanner.

10. An optical scanner according to any of claims 2 to 8, wherein the interrogation station is internal to the scanner.

11. An optical scanner according to any of claims 3 to 10; wherein the scanner is portable, and contains a trigger for actuating the projector.

12. An optical scanner according to any preceding claim, wherein the means for detecting radiation comprises a detector for detecting a sample signature produced by the sample in response to the excitation radiation, and the scanner further comprises:
means for storing a reference signature; and
means for comparing the reference signature with the sample signature and, if they match, issuing a signal.

13. An optical scanner according to any of claims 3 to 12, and further comprising:
a reference material accessible to the scanner, which produces a reference signature when excited by the projector.

14. A method of optical scanning, comprising the steps of:
positioning a non-crystalline sample at an interrogation station;
positioning a reference material at a reference station;
projecting a set of frequencies of excitation radiation toward the interrogation station;
projecting the set of frequencies of excitation radiation toward the reference material;
detecting a sample signature produced by the sample in response to the set of frequencies; and
detecting a reference signature produced by the reference material in response to the set of frequencies.
